# EUROPÄISCHE PATENTANMELDUNG

(11) **EP 0 882 489 A2**
(43) Veröffentlichungstag der Anmeldung: **09.12.1998**
(21) Anmeldenummer: 98107779.5
(22) Anmeldetag: 29.04.1998
(51) Int. Cl.: B01D 53/81, B01D 53/50, B01D 53/68

(54) **Verfahren zur Abscheidung von Schadgaskomponenten aus einem Abgas**

(30) Priorität: 07.05.1997 DE 19719243
(71) Anmelder: DEUTSCHE BABCOCK ANLAGEN GMBH, 46049 Oberhausen (DE)
(72) Erfinder: Dohmann, Joachim, Dr., 46149 Oberhausen (DE); Keldenich, Kai, Dr., 45134 Essen (DE)
(74) Vertreter: Radünz, Ingo, Dipl.-Ing.

(57) **Zusammenfassung**

Bei einem Verfahren zur Abscheidung von Schadgaskomponenten aus einem Abgas wird dieses Abgas auf die oder bis nahe an die Kühlgrenztemperatur gekühlt. In das so gekühlte Abgas wird ein festes, staubförmiges oder körniges, die Schadgaskomponenten bindendes Additiv eingeblasen. Das gekühlte und mit dem Additiv versetzte Abgas wird anschließend unter die Kühlgrenztemperatur gekühlt und danach einem Staubabscheider zugeführt.

## Beschreibung

Die Erfindung betrifft ein Verfahren zur Abscheidung von Schadgaskomponenten aus einem Abgas mit den Merkmalen des Oberbegriffes des Anspruches 1.

Bei diesem Verfahren wird dem zu reinigenden Abgas zur Abscheidung der Schadgaskomponenten wie HCl und SO₂ ein festes Neutralisationsmittel in Form von Oxiden, Hydroxiden, Carbonaten oder Hydrogencarbonaten von Alkali- oder Erdalkalimetallen oder Mischungen davon, z.B. Ca(OH)₂) zugegeben. Das Neutralisationsmittel wird bei diesem Trockenverfahren anschließend durch einen Staubabscheider dem Angasstrom entzogen. Dies geschieht vorzugsweise mittels eines Gewebefilters, da beim Durchtritt des Abgases durch den Filterkuchen noch nicht umgesetzte Anteile der Schadgase mit unverbrauchtem Neutralisationsmittel weitere Reaktion zeigen. Es ist möglich, einen Teil des am Gewebefilters abgeschiedenen Feststoffs dem Prozeß erneut zuzuführen. Es ist weiterhin bekannt, in das Abgas vor oder hinter der Zugabe des Neutralisationsmittels Wasser einzuspritzen.

Ein weiteres Verfahren zur Verminderung des Bedarfs an Neutralisationsmittel ist das sogenannte Quasitrockenverfahren, bei dem das Neutralisationsmittel in Form einer wäßrigen Suspension in den noch heißen Abgasstrom mittels Düsen eingebracht wird. Der Wasseranteil der Suspension verdampft während der Flugstromphase vollständig. Das Reaktionsprodukt wird ebenfalls in Form eines festen trockenen Staubes mittels eines Staubabscheiders aus dem Abgasstrom entfernt. Ein wesentlicher Unterschied zwischen dem Quasitrockenverfahren und dem Trockenverfahren besteht in der Art des Stoffübergangs. Beim Trockenverfahren werden in einem ersten Reaktionsschritt die Schadgaskomponenten durch Adsorption an das Neutralisationsmittel gebunden. Beim Quasitrockenverfahren vollzieht sich hingegen eine Absorption an der wäßrigen Phase der Suspension, was offensichtlich eine Verbesserung der Stoffübergangskoeffizienten nach sich zieht.

Nachteilig an den genannten Verfahren ist, daß die durch die Einbringung von Wasser erreichte Abkühlung der Rauchgase nur in ausreichendem Abstand zur Kühlgrenztemperatur der Gase erfolgen darf. Bei zu großer Annäherung an die Kühlgrenztemperatur besteht die Gefahr der Bildung freien Kondensats, das zu Betriebsstörungen im nachgeschalteten Staubabscheider führen kann. Ein Nachteil des Quasitrockenverfahrens ist der erhebliche Energiebedarf, der zur Zerstäubung der Suspension bei der Verwendung von dampf- oder druckluftgetriebenen pneumatischen Düsen oder Rotationszerstäubern aufgebracht werden muß.

Der Erfindung liegt die Aufgabe zugrunde, bei einem gattungsgemäßen Verfahren, das Additiv besser zu nutzen, um die Abscheideleistung zu verbessern oder die Additivmenge zu verringern.

Diese Aufgabe bei einem gattungsgemäßen Verfahren erfindungsgemäß durch die kenazeichnenden Merkmale des Anspruches 1 gelöst. Vorteilhafte Ausgestaltungen der Erfindung sind Gegenstand der Unteransprüche

Bei dem erfindungsgemäßen Verfahren wird der Abgasstrom durch die Abkühlung auf die oder bis nahe an die Kühlgrenztemperatur mit Feuchtigkeit gesättigt und besitzt die relative Feuchte von 1. Vorzugsweise erfolgt die Kühlung durch Einspritzen von Wasser in einem Quenchapparat oder Verdampfungskühler. Das so gekühlte und mit Feuchtigkeit gesättigte Abgas wird im nächsten Verfahrensschritt unter die Kühlgrenztemperatur gekühlt, was durch indirekte Kühlung oder vorzugsweise durch Beimischen einer bestimmten, regelbaren Menge eines kalten Gasstroms z.B. eines in einem Befeuchter abgekühlten und gesättigten Umgebungsluftstromes bewirkt wird. Bei dieser Vermischung tritt eine Übersättigung des Mischgases mit Wasserdampf auf. Die Übersättigung baut sich durch Einsetzen eines Kondensationsvorganges ab, der bevorzugt an Kondensationskeimen einsetzt. Die in den Mischgasstrom eingebrachte Additive wirken als Kondensationskeime, weshalb die Kondensation gezielt auf den Oberflächen des Additivs abläuft und dieses mit einem dünnen Kondensatfilm überzieht. In diesem Kondensatfilm herrscht eine geringe Temperatur, nämlich die Kühlgrenztemperatur, was die Löslichkeit der abzuscheidenden Schadgase begünstigt. Die Kühlgrenztemperatur des Mischgases ist geringfügig geringer als die Temperatur des zuvor abgekühlten Abgases. In dem Kondensatfilm findet eine Absorption der abzuscheidenden Schadgase statt, was den ersten Schritt der daraufhin einsetzenden Reaktionssequenz der Neutralisationsreaktion darstellt.

Um zu verhindern, daß bei dem Eintritt in den Staubabscheider auf den Feststoffoberflächen des Additivs noch freies Kondensat vorhanden ist, kann durch eine Regelung der Menge des im Bypass geführten ungekühlten Abgasstromes die Temperatur des Mischgasstromes angehoben werden. Durch geeignete Abstimmung der Mengenverhältnisse des Bypassstromes und des Kaltluftstromes kann Kondensatfreiheit nach Abschluß der Mischung erreicht werden. Die chemische Neutralisationsreaktion der abzuscheidenden Schadgaskomponenten mit dem Additiv ist in aller Regel exotherm. Die Reaktionswärme wird gezielt in unmittelbarer Nähe des Kondensatfilmes auf dem Additiv frei, was zu einer Verdampfung des Kondensatfilms führt bzw. dazu mit beiträgt.

Ein weiterer nutzbarer und erwünschter Nebeneffekt resultiert aus der Möglichkeit, in der verwendeten Quenchapparatur Halogenwasserstoffe, insbesondere HCl abzuscheiden. Damit sinkt der Anteil des in der Neutralisationsreaktion gebildeten Calciumchlorids, das hygroskopisch ist und bei hohen relativen Feuchten und niedrigen Temperaturen zur Bildung von dem Feststoff anhaftenden Wassers neigt. Dieses kann zur Verklebung bzw. Verfestigung des Feststoffe im Staubabscheider führen, was die Abreinigbarkeit des Staubabscheiders nachteilig beeinflussen kann. Die Quenchapparatur kann ebenfalls zur Abscheidung von Quecksilber verwendet werden, da ionogen vorliegendes Quecksilber mit den Chloriden der Quenchflüssigkeit unter Bildung gut löslicher Quecksilber-Chloro-Komplexe reagiert.

Die Erfindung sei an einem Ausführungsbeispiel und einer Zeichnung näher erläutert, die das Verfahrensschema eines Verfahrens zur Abscheidung von Schadgaskomponenten aus einem Abgas wiedergibt.

Heißes Abgas, das aus einem Verbrennungsprozeß, z. B. aus einer Müllverbrennungsanlage stammt, wird über eine Abgasleitung 1 einem Kühler 2 zugeführt. Der Kühler kann ein indirekter Kühler oder, wie dargestellt, vorzugsweise ein Verdampfungskühler oder Quenchapparat sein. In dem Kühler 2 sind Sprühdüsen 3 angeordnet, über die Wasser in den Abgasstrom eingesprüht wird. Das nicht verdampfte Wasser sammelt sich in einem Sumpf 4 im Unterteil des Kühlers 2 und wird über eine Pumpe 5 zu den Sprühdüsen 3 zurückgeführt. Ein Teil des Wassers wird aus dem Sumpf 4 über eine Abflutung 6 abgezogen. Mit dem abgezogenen Wasser werden auch die darin gelösten Schadstoffe aus dem System entfernt. Wird ein indirekter Kühler verwendet, so empfiehlt es, das abzukühlende Abgas durch Einspritzen von Wasser oder Wasserdampf zu befeuchten.

In dem Kühler 2 wird das Abgas auf die oder bis nahe an die Kühlgrenztemperatur abgekühlt. Unter Kühlgrenztemperatur wird die Temperatur verstanden, die sich bei adiabatischem Wärme- und Stoffaustausch zwischen dem Abgas und der in den Kühler eingesprühten Flüssigkeit einstellt. Durch diese Abkühlung ist das Abgas mit Feuchtigkeit gesättigt. Aus dem Kühler 2 gelangt das abgekühlte und mit Feuchtigkeit gesättigte Abgas in einen Mischreaktor 7, in dem es auf die später näher beschriebene Weise mit einem die Schadgaskomponenten bindenden Additiv versetzt wird Als Additiv wird ein Neutralisationsmittel in Form von Oxiden, Hydroxiden, Carbonaten oder Hydrogencarbonaten von Alkali- oder Erdalkalimetallen oder Mischungen davon, z.B. Ca(OH)₂) verwendet, das Schadgase, vor allem SO₂ z. B. als CaSO₃ oder CaSO₄ bindet.

In dem Mischreaktor 7 wird das abgekühlte, mit Feuchtigkeit gesättigte und mit den Additiven versetzte Abgas unter die Kühlgrenztemperatur abgekühlt. Hierdurch kommt es zu einer Übersättigung des Abgases mit Feuchtigkeit. Die Übersättigung baut sich durch eine Kondensation in der Weise ab, daß sich ein Kondensatfilm auf den als Kondensationskeimen dienenden Additivkörnern bildet.

Die Abkühlung des Abgases in dem Mischreaktor 7 kann durch indirekte Kühlung an Wärmetauscherflächen bewirkt werden. In vorteilhafter Weise wird zur Kühlung des Abgases unter die Kühlgrenztemperatur in den Abgasstrom ein Gas von einer Temperatur eingeblasen, die geringer ist als die Temperatur des Abgases vor dem Eintritt in dem Mischreaktor 7. Vorzugsweise wird als Kaltgas Umgebungsluft verwendet. Diese Luft wird mit Hilfe eines Gebläses 8 über einen Befeuchter 9 angesaugt, in den Wasser zur Befeuchtung der Luft eingespeist wird. Durch eine mit einer Regelklappe 10 versehene Luftleitung 11 wird die Luft in den Mischreaktor 7 eingetragen.

Das Additiv kann direkt in den Mischreaktor 7 eingetragen werden und zwar in Strömungsrichtung des Abgases gesehen vor der Zugabe des als Kaltgas dienenden Luftstromes. Vorzugsweise wird das Additiv zusammen mit der Luft in den Mischreaktor 7 eingebracht. Dazu ist eine das Additiv fördernde Additivleitung 12 vorgesehen, die in die Luftleitung 11 einmündet. Die Dosierung des Additivs erfolgt in Abhängigkeit von der Schadgasfracht in dem Abgasstrom und von einem empirisch ermittelten Stöchiometriefaktor. Die Luft- oder Kaltgasmenge wird über die Regelklappe 10 in Abhängigkeit von dem Abgasvolumenstrom geregelt. Die Luftmenge beträgt etwa 10% der jeweiligen Abgasmenge.

Aus dem Mischreaktor 7 wird das Abgas einem Gewebefilter 13 zugeführt, in dem das Additiv an den Filterflächen abgeschieden wird. Das gereinigte Abgas tritt über eine Reingasleitung 14 aus dem Gewebefilter 13 aus.

Die innerhalb des Mischreaktors 7 in dem Kondensatfilm auf der Oberfläche der Additivkörner ablaufende Neutralisationsreaktion ist exotherm. Die Reaktionswärme bewirkt eine teilweise Verdampfung des auf den Oberflächen der Additivpartikel anhaftenden Kondensats. Um mit Sicherheit den Eintrag von feuchten Additivpartikeln in den Gewebefilter 13 zu verhindern, wird die Temperatur des Abgases angehoben. Zu diesem Zweck wird vor dem Kühler 2 von der Abgasleitung 1 eine Bypassleitung 15 abgezweigt und zu dem Mischreaktor 7 geführt. Über diese Bypassleitung 15 wird ein Teilstrom des ungekühlten Abgases abgezweigt und dem in dem Mischreaktor 7 behandelten Abgas vor dessen Eintritt in den Gewebefilter 13 beigemischt. In der Bypassleitung 15 ist eine Regelklappe 16 angeordnet, über die die Teilstrommenge des ungekühlten Abgases in Abhängigkeit von der Menge der Kaltgas- bzw. Luftmenge geregelt wird. Die Teilstrommenge beträgt etwa 10% der Luftmenge.

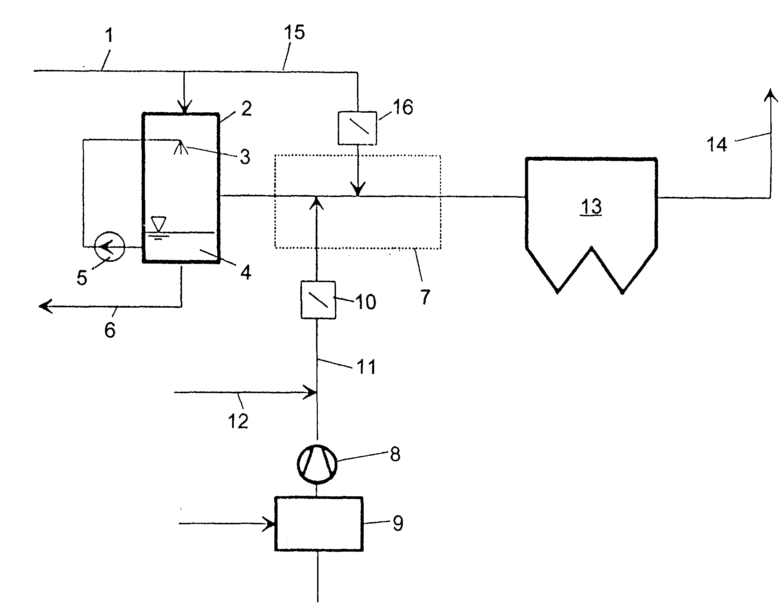

## Patentansprüche

1. Verfahren zur Abscheidung von Schadgaskomponenten aus einem Abgas, bei dem das Abgas gekühlt, mit einem festen, staubförmigen oder körnigen, die Schadgaskomponenten bindenden Additiv versetzt und einem Staubabscheider zugeführt wird, dadurch gekennzeichnet, daß das Abgas auf die oder bis nahe an die Kühlgrenztemperatur gekühlt wird, daß das Additiv in das so gekühlte Abgas eingeblasen wird und daß das gekühlte und mit dem Additiv versetzte Abgas unter die Kühlgrenztemperatur gekühlt wird.

2. Verfahren nach Anspruch 1, dadurch gekennzeichnet, daß bei der Kühlung auf die oder bis nahe an die Kühlgrenztemperatur die Feuchte des Abgases angehoben wird.

3. Verfahren nach Anspruch 1 und 2, dadurch gekennzeichnet, daß das Abgas durch Einspritzen von Wasser auf die oder bis nahe an die Kühlgrenztemperatur gekühlt wird.

4. Verfahren nach einem der Ansprüche 1 bis 3, dadurch gekennzeichnet, daß in das auf die oder bis nahe an die Kühlgrenztemperatur gekühlte Abgas in Strömungsrichtung hinter der Zugabe des Additivs oder zusammen mit dem Additiv ein Gas geringerer Temperatur eingeblasen wird.

5. Verfahren nach Anspruch 4, dadurch gekennzeichnet, daß das Gas geringerer Temperatur Luft ist, die der Umgebung entnommen wird.

6. Verfahren nach Anspruch 5, dadurch gekennzeichnet, daß die Luft angefeuchtet wird.

7. Verfahren nach einem der Ansprüche 4 bis 6, dadurch gekennzeichnet, daß die Menge des Gases geringerer Temperatur in Abhängigkeit von der Menge des gekühlten Abgases geregelt wird.

8. Verfahren nach einem der Ansprüche 1 bis 7, dadurch gekennzeichnet, daß ein ungekühlter Teilstrom des Abgases dem gekühlten Abgas hinter der Additivzugabe und vor dem Eintritt in den Staubabscheider zugeführt wird.

9. Verfahren nach Anspruch 8, dadurch gekennzeichnet, daß die Menge des ungekühlten Teilstromes des Abgases in Abhängigkeit von der Menge des Gases geringerer Temperatur geregelt wird.
